# EUROPEAN PATENT APPLICATION

(11) **EP 4 851 212 A1**
(43) Date of publication of application: **09.12.2026**
(21) Application number: 25927002.3
(22) Date of filing: 13.08.2025
(51) Int. Cl.: C08G 61/12, C08J 5/22, C08L 65/00, H01M 8/0239, H01M 8/103

(54) **ANION-EXCHANGE POLYMER AND PREPARATION METHOD THEREFOR, AND ANION-EXCHANGE MEMBRANE**

(30) Priority: 14.03.2025 CN 202510307772
(71) Applicant: EVE Hydrogen Energy Co., LTD., Huizhou, Guangdong 516000 (CN)
(72) Inventor: YUAN, Panpan, Huizhou, Guangdong 516000 (CN); SU, Xiangdong, Huizhou, Guangdong 516000 (CN); WANG, Ying, Huizhou, Guangdong 516000 (CN)
(74) Representative: Ghirardi, Valeria
(86) International application number: PCT/CN2025/114324
(87) International publication number: WO 2026/188724

(57) **Abstract**

Provided are an anion-exchange polymer, a preparation method therefor and an anion-exchange membrane. The anion-exchange polymer comprises a chain unit I and/or a chain unit II, a structural formula of the chain unit I is 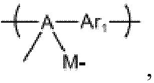 and a structural formula of the chain unit II is 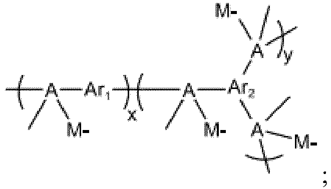 wherein A is nitrogen-containing heterocyclic ketone, Ar₁ is a first aryl structure, Ar₂ is a second aryl structure, M- is a trifluoroacetate ion and/or a p-toluenesulfonate ion. The anion-exchange polymer in the present application exhibits low catalyst poisoning and demonstrates excellent electrochemical performance.

## Description

This application claims priority to Chinese Patent Application No. 2025103077728 filed with CNIPA on March 14, 2025, the disclosure of which is incorporated herein by reference in its entirety.

### TECHNICAL FIELD

The present application relates to the technical field of battery materials, and specifically relates to an anion-exchange polymer, a preparation method therefor and an anion-exchange membrane.

### BACKGROUND

Anion-exchange membranes include polymer backbone and anion-exchange groups. The polymer backbone provides the membrane material with mechanical strength and mechanical stability, while the anion-exchange groups provide the membrane material with hydroxide-ion conductivity. Anion-exchange membranes play a crucial role in the production and utilization of hydrogen energy, and demonstrate significant application potential particularly in the fields of water electrolysis for hydrogen production and fuel cell.

Anion-exchange membranes are prepared from anion-exchange polymer, which is generally obtained through a two-step process including a superacid polymerization and a quaternization reaction. The quaternization reaction refers to the process where the polymer product forms quaternary ammonium salt-polymer through specific quaternization reagents and reaction conditions. Conventional quaternization reagents are haloalkanes, mostly iodomethane, and the anionic form after quaternization reaction is halide ions. However, most halide ions may cause varying levels of catalyst poisoning, and they may directly interact with the active sites on the catalyst surface, leading to system failure.

CN116425959A discloses an anion-exchange polymer, an anion-exchange membrane, and a preparation method therefor and use thereof. The anion-exchange polymer is crosslinked polymer. Its main chain contains aryl groups and piperidinium cation structures; the nitrogen of the piperidinium cation structure in the main chain is grafted with side chains having cationic groups; these side chains form a crosslinked network structure through crosslinking.

CN113307966 discloses a copolymer containing a quaternary ammonium salt of tetramethylpiperidine oxide, a preparation method therefor and use thereof. First, a haloalkylated polymer is prepared. Then, using the halogen at the terminal position of the alkyl chain as a reactive site, a cationic group with a stable nitroxide radical is functionally grafted onto the polymer via an atom transfer radical coupling reaction. The cyclic piperidine group can enhance the steric hindrance effect of the cation, thereby improving the stability of the cationic functional group. Concurrently, the presence of the six-membered nitroxide radical ring can reduce the water absorption and swelling ratio of the membrane. After membrane casting and ion exchange processes, the obtained alkaline anion-exchange membrane material exhibits high alkali-resistance stability, high ionic conductivity, and low water absorption and swelling ratios.

### TECHNICAL PROBLEM

The anion-exchange polymers prepared by the above schemes are highly poisonous to catalysts, and thereby leading to poor electrochemical performance and reduced service life.

### TECHNICAL SOLUTION

The present application provides an anion-exchange polymer, a preparation method therefor and an anion-exchange membrane. The anion-exchange polymer in the present application exhibits low catalyst poisoning and demonstrates excellent electrochemical performance.

In a first aspect, the present application provides an anion-exchange polymer. The anion-exchange polymer comprises a chain unit I and/or a chain unit II. A structural formula of the chain unit I is 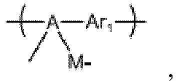 and a structural formula of the chain unit II is 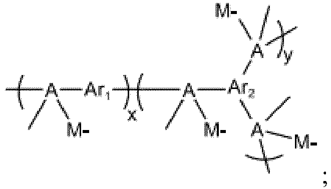 wherein A is nitrogen-containing heterocyclic ketone, Ar₁ is a first aryl structure, Ar₂ is a second aryl structure, M- is a trifluoroacetate ion and/or a p-toluenesulfonate ion, x is 0.5-0.9, and y equals 1-x.

In a second aspect, the present application provides a preparation method for the anion-exchange polymer as described in the first aspect, and the preparation method comprises the following steps:
(1) mixing monomers of the chain unit I and/or monomers of the chain unit II, the nitrogen-containing heterocyclic ketone, and a first solvent to obtain a first mixed solution; adding superacid to the first mixed solution and performing a polymerization reaction to obtain a polymer precursor; and
(2) mixing the polymer precursor, a quaternization reagent, an acid-binding agent, and a second solvent to obtain a second mixed solution; subjecting the second mixed solution to a functionalization reaction to obtain the anion-exchange polymer.

In a third aspect, the present application provides an anion-exchange membrane, and the anion-exchange membrane is prepared from the anion-exchange polymer as described in the first aspect by dissolving in a third solvent, and then coating and drying.

Compared with the related art, the present application has the following beneficial effects.

The anion-exchange polymer in the present application exhibits low catalyst poisoning and demonstrates excellent electrochemical performance.

Other aspects will be appreciated upon reading and understanding the detailed description.

### DETAILED DESCRIPTION

In a first aspect, the present application provides an anion-exchange polymer. The anion-exchange polymer comprises a chain unit I and/or a chain unit II. A structural formula of the chain unit I is 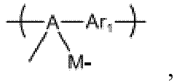 and a structural formula of the chain unit II is 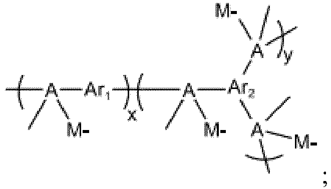 wherein A is nitrogen-containing heterocyclic ketone, Ar₁ is a first aryl structure, Ar₂ is a second aryl structure, M- is a trifluoroacetate ion and/or a p-toluenesulfonate ion, x is 0.5-0.9, and y equals 1-x.

In the present application, the chain unit I and/or the chain unit II in the anion-exchange polymer, due to their unique structures, exhibit low electronegativity and weak interaction with metal active sites, and thus have low catalyst poisoning.

Optionally, based on the total amount of substance of chain units in the anion-exchange polymer being 100%, an amount-of-substance proportion of the chain unit I is 85-95%, for example, 85%, 88%, 90%, 92%, or 95%, which is not limited to the listed values, and other unlisted values within the numerical range are also applicable.

Optionally, based on the total amount of substance of chain units in the anion-exchange polymer being 100%, an amount-of-substance proportion of the chain unit II is 5-15%, for example, 5%, 8%, 10%, 12%, or 15%, which is not limited to the listed values, and other unlisted values within the numerical range are also applicable.

Optionally, the nitrogen-containing heterocyclic ketone comprises piperidinone and/or quinuclidinone.

Optionally, a structural formula of the piperidinone is 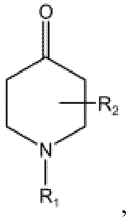 wherein R₁ and R₂ each independently comprises any one or a combination of at least two of methyl, ethyl, propyl, butyl, pentyl, cyclopropyl, cyclopropyl or halogen. A typical but non-limiting combination comprises a combination of methyl and ethyl, a combination of ethyl and propyl, or a combination of methyl and halogen.

Optionally, a structural formula of the quinuclidinone is 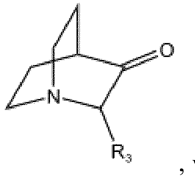 wherein R₃ comprises any one or a combination of at least two of hydrogen, alkyl, alkenyl, alkynyl, hydroxyl, alkoxy, or aryl. A typical but non-limiting combination comprises a combination of alkyl and alkenyl, a combination of hydroxyl and alkoxy, or a combination of aryl and alkoxy.

Optionally, the first aryl structure comprises any one or a combination of at least two of biphenyl, p-terphenyl, m-terphenyl, quaterphenyl, or 1,2-diphenylethane. A typical but non-limiting combination comprises a combination of biphenyl and p-terphenyl, a combination of m-terphenyl and quaterphenyl, or a combination of p-terphenyl and m-terphenyl.

Optionally, the second aryl structure comprises any one or a combination of at least two of 1,3,5-triphenylbenzene, triphenylmethane, 9,10-benzophenanthrene, tetraphenylmethane, triptycene, 9,9'-diphenylfluorene, 9,9'-spirobifluorene, 9,9'-bifluorene, 9,9'-bicarbazole, 4,4-di(9-carbazolyl)biphenyl, 2,2'-bi-9,9'-spirobi[9H-fluorene], or triphenylamine. A typical but non-limiting combination comprises a combination of 1,3,5-triphenylbenzene and triphenylmethane, a combination of 9,9'-spirobifluorene and 9,9'-bifluorene, or a combination of 2,2'-bi-9,9'-spirobi[9H-fluorene] and triphenylamine.

In a second aspect, the present application provides a preparation method for the anion-exchange polymer as described in the first aspect, and the preparation method comprises the following steps:
(1) mixing monomers of the chain unit I and/or monomers of the chain unit II, the nitrogen-containing heterocyclic ketone, and a first solvent to obtain a first mixed solution; adding superacid to the first mixed solution and performing a polymerization reaction to obtain a polymer precursor; and
(2) mixing the polymer precursor, a quaternization reagent, an acid-binding agent, and a second solvent to obtain a second mixed solution; subjecting the second mixed solution to a functionalization reaction to obtain the anion-exchange polymer.

Optionally, the first solvent in step (1) comprises any one or a combination of at least two of dichloromethane, trichloromethane, chloroform, or tetrahydrofuran.

Optionally, in step (1), an amount-of-substance ratio of the total amount of substance of the monomers of the chain unit I and the monomers of the chain unit II to the nitrogen-containing heterocyclic ketone is 1:(1-4), for example, 1:1, 1:1.5, 1:2, 1:3, or 1:4, which is not limited to the listed values, and other unlisted values within the numerical range are also applicable.

Optionally, the superacid in step (1) comprises any one or a combination of at least two of methanesulfonic acid, pentafluoropropionic acid, trifluoroacetic acid, trifluoromethanesulfonic acid, or heptafluorobutyric acid. A typical but non-limiting combination comprises a combination of methanesulfonic acid and pentafluoropropionic acid, a combination of pentafluoropropionic acid and trifluoroacetic acid, or a combination of trifluoromethanesulfonic acid and heptafluorobutyric acid.

Optionally, the addition of the superacid in step (1) is performed at an environmental temperature of -2°C to 2°C, for example, -2°C, -1°C, 0°C, 1°C, or 2°C, which is not limited to the listed values, and other unlisted values within the numerical range are also applicable.

Optionally, the polymerization reaction in step (1) comprises performing an oligomerization reaction first and then a high-degree polymerization reaction.

Optionally, the oligomerization reaction is performed at a temperature of 4-6°C, for example, 4°C, 4.5°C, 5°C, 5.5°C, or 6°C, which is not limited to the listed values, and other unlisted values within the numerical range are also applicable.

Optionally, the oligomerization reaction is performed for a period of 1-5 h, for example, 1 h, 2 h, 3 h, 4 h, or 5 h, which is not limited to the listed values, and other unlisted values within the numerical range are also applicable.

Optionally, the high-degree polymerization reaction is performed at a temperature of 12-18°C, for example, 12°C, 13°C, 14°C, 15°C, 16°C, 17°C, or 18°C, which is not limited to the listed values, and other unlisted values within the numerical range are also applicable.

Optionally, the high-degree polymerization reaction is performed for a period of 1-5 h, for example, 1 h, 2 h, 3 h, 4 h, or 5 h, which is not limited to the listed values, and other unlisted values within the numerical range are also applicable.

Optionally, after the polymerization reaction in step (1), extrusion, water washing, and drying are performed.

Optionally, the quaternization reagent in step (2) comprises methyl trifluoroacetate and/or methyl p-toluenesulfonate.

Optionally, in step (2), an amount-of-substance ratio of the quaternization reagent to the polymer precursor is (1.2-1.8):1, for example, 1.2:1, 1.4:1, 1.5:1, 1.6:1, or 1.8:1, which is not limited to the listed values, and other unlisted values within the numerical range are also applicable.

Optionally, the acid-binding agent in step (2) comprises any one or a combination of at least two of potassium carbonate, sodium carbonate, triethylamine, diethanolamine, or ethylenediamine. A typical but non-limiting combination comprises a combination of potassium carbonate and sodium carbonate, a combination of sodium carbonate and triethylamine, or a combination of triethylamine and diethanolamine.

Optionally, in step (2), an amount-of-substance ratio of the acid-binding agent to the polymer precursor is (1.1-1.3):1, for example, 1.1:1, 1.15:1, 1.2:1, 1.25:1, or 1.3:1, which is not limited to the listed values, and other unlisted values within the numerical range are also applicable.

Optionally, the second solvent in step (2) comprises any one or a combination of at least two of dimethyl sulfoxide, tetrahydrofuran, N-methyl-2-pyrrolidone, N,N-dimethylformamide, N,N-dimethylacetamide, or acetonitrile. A typical but non-limiting combination comprises a combination of dimethyl sulfoxide and tetrahydrofuran, a combination of N,N-dimethylacetamide and acetonitrile, or a combination of N-methyl-2-pyrrolidone and N,N-dimethylformamide.

Optionally, the functionalization reaction in step (2) is performed at a temperature of 30-100°C, for example, 30°C, 50°C, 60°C, 80°C, or 100°C, which is not limited to the listed values, and other unlisted values within the numerical range are also applicable.

Optionally, the functionalization reaction in step (2) is performed for a period of 10-20 h, for example, 10 h, 12 h, 15 h, 18 h, or 20 h, which is not limited to the listed values, and other unlisted values within the numerical range are also applicable.

In a third aspect, the present application provides an anion-exchange membrane, and the anion-exchange membrane is prepared from the anion-exchange polymer as described in the first aspect by dissolving in a third solvent, and then coating and drying.

Optionally, the third solvent comprises any one or a combination of at least two of ethanol, ethyl acetate, ethylene glycol, diethyl ether, tetrahydrofuran, acetone, or water. A typical but non-limiting combination comprises a combination of ethyl acetate and ethylene glycol, a combination of ethylene glycol and diethyl ether, or a combination of tetrahydrofuran and acetone.

Optionally, the drying is performed at a temperature of 50-70°C, for example, 50°C, 55°C, 60°C, 65°C, or 70°C, which is not limited to the listed values, and other unlisted values within the numerical range are also applicable.

Optionally, the drying is performed for a period of 5-10 h, for example, 5 h, 6 h, 7 h, 8 h, 9 h, or 10 h, which is not limited to the listed values, and other unlisted values within the numerical range are also applicable.

The technical solutions of the present application are further described below in terms of specific embodiments. It should be clear to those skilled in the art that the embodiments are merely used for a better understanding of the present application and should not be regarded as a specific limitation to the present application.

### Example 1

This example provides an anion-exchange polymer, and a preparation method for the anion-exchange polymer is as follows:
(1) p-terphenyl (0.135 mol) and N-methyl-4-piperidinone (0.36 mol) were mixed in dichloromethane (100 mL); trifluoroacetic acid (22.8 mL) and trifluoromethanesulfonic acid (240 mL) were added dropwise to the solution at 0°C; after the addition was completed, an oligomerization reaction was carried out at 5°C for 3 h followed by a high-degree polymerization reaction at 15°C for 3 h; after the reaction was completed, the polymer was extruded into pure water via an extruder, then filtered, washed with pure water, and dried to obtain a polymer precursor; and
(2) the polymer product obtained in step (1) (0.1 mol), an acid-binding agent triethylamine (0.12 mol), and a quaternization reagent methyl trifluoroacetate (0.15 mol) were mixed using dimethyl sulfoxide (200 mL) and reacted at 80°C for 15 h; after the reaction was completed, the product was precipitated using ethyl acetate as a precipitant, filtered, washed with ethyl acetate, and dried to obtain the anion-exchange polymer; The structural formula of the anion-exchange polymer is

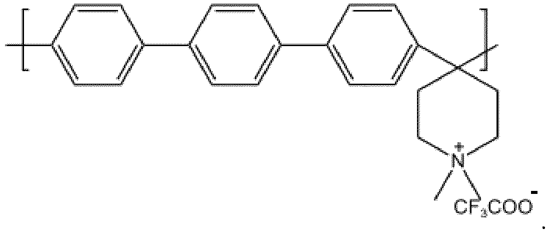

### Example 2

This example provides an anion-exchange polymer, and a preparation method for the anion-exchange polymer is as follows:
(1) p-terphenyl (0.135 mol) and 3-quinuclidinone (0.36 mol) were mixed in dichloromethane (100 mL); trifluoroacetic acid (22.8 mL) and trifluoromethanesulfonic acid (240 mL) were added dropwise to the solution at 0°C; after the addition was completed, an oligomerization reaction was carried out at 5°C for 3 h followed by a high-degree polymerization reaction at 15°C for 4 h; after the reaction was completed, the polymer was extruded into pure water via an extruder, then filtered, washed with pure water, and dried to obtain a polymer precursor; and
(2) the polymer product obtained in step (1) (0.1 mol), an acid-binding agent triethylamine (0.11 mol), and a quaternization reagent methyl trifluoroacetate (0.15 mol) were mixed using dimethyl sulfoxide (200 mL) and reacted at 80°C for 15 h; after the reaction was completed, the product was precipitated using ethyl acetate as a precipitant, filtered, washed with ethyl acetate, and dried to obtain the anion-exchange polymer; The structural formula of the anion-exchange polymer is

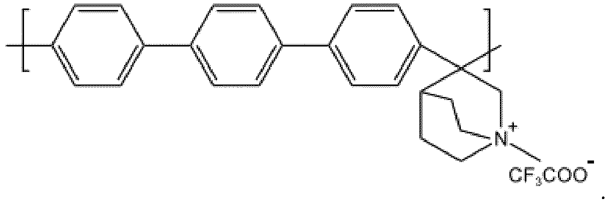

### Example 3

This example provides an anion-exchange polymer, and a preparation method for the anion-exchange polymer is as follows:
(1) p-terphenyl (0.091 mol), biphenyl (0.039 mol), and N-methyl-4-piperidinone (0.36 mol) were mixed in dichloromethane (100 mL); trifluoroacetic acid (22.8 mL) and trifluoromethanesulfonic acid (240 mL) were added dropwise to the solution at 0°C; after the addition was completed, an oligomerization reaction was carried out at 5°C for 2 h followed by a high-degree polymerization reaction at 15°C for 4 h; after the reaction was completed, the polymer was extruded into pure water via an extruder, then filtered, washed with pure water, and dried to obtain a polymer precursor; and
(2) the polymer product obtained in step (1) (0.1 mol), an acid-binding agent triethylamine (0.13 mol), and a quaternization reagent methyl p-toluenesulfonate (0.15 mol) were mixed using dimethyl sulfoxide (200 mL) and reacted at 80°C for 15 h; after the reaction was completed, the product was precipitated using ethyl acetate as a precipitant, filtered, washed with ethyl acetate, and dried to obtain the anion-exchange polymer; the structural formula of the anion-exchange polymer is

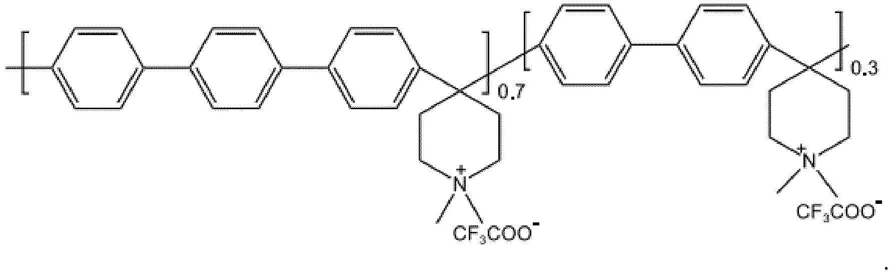

### Example 4

This example provides an anion-exchange polymer, and a preparation method for the anion-exchange polymer is as follows:
(1) p-terphenyl (0.155 mol), triphenyl methane (0.015 mol), and N-methyl-4-piperidinone (1.95 mol) were mixed in dichloromethane (100 mL); trifluoroacetic acid (22.8 mL) and trifluoromethanesulfonic acid (240 mL) were added dropwise to the solution at 0°C; after the addition was completed, an oligomerization reaction was carried out at 5°C for 3 h followed by a high-degree polymerization reaction at 15°C for 5 h; after the reaction was completed, the polymer was extruded into pure water via an extruder, then filtered, washed with pure water, and dried to obtain a polymer precursor; and
(2) the polymer product obtained in step (1) (0.1 mol), an acid-binding agent triethylamine (0.12 mol), and a quaternization reagent methyl trifluoroacetate (0.15 mol) were mixed using dimethyl sulfoxide (200 mL) and reacted at 80°C for 15 h; after the reaction was completed, the product was precipitated using ethyl acetate as a precipitant, filtered, washed with ethyl acetate, and dried to obtain the anion-exchange polymer; the structural formula of the anion-exchange polymer is 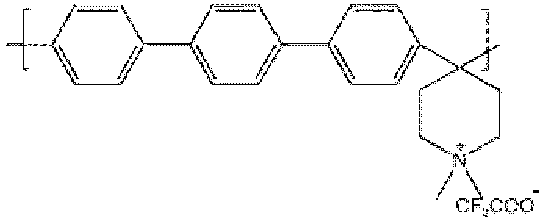 and 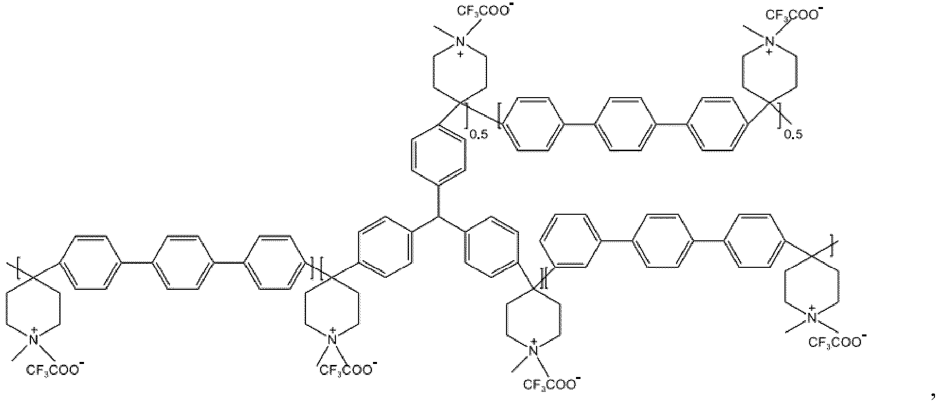 wherein an amount-of-substance proportion of the chain unit I is 88%, and an amount-of-substance proportion of the chain unit II is 12%.

### Example 5

This example differs from Example 4 only in that the additive amount of the acid-binding agent was 0.1 mol. Other conditions and parameters were exactly the same as those in Example 1.

### Example 6

This example differs from Example 4 only in that the additive amount of the acid-binding agent was 0.15 mol. Other conditions and parameters were exactly the same as those in Example 1.

### Example 7

This example differs from Example 4 only in that the amount-of-substance proportion of the chain unit I was 98% and the amount-of-substance proportion of the chain unit II was 2%. Other conditions and parameters were exactly the same as those in Example 1.

### Example 8

This example differs from Example 4 only in that the amount-of-substance proportion of the chain unit I was 80% and the amount-of-substance proportion of the chain unit II was 20%. Other conditions and parameters were exactly the same as those in Example 1.

### Comparative Example 1

This comparative example differs from Example 1 only in that the quaternization reagent methyl trifluoroacetate was replaced with an equal amount of iodomethane. Other conditions and parameters were exactly the same as those in Example 1.

### Comparative Example 2

This comparative example differs from Example 2 only in that the quaternization reagent methyl trifluoroacetate was replaced with an equal amount of iodomethane. Other conditions and parameters were exactly the same as those in Example 1.

### Comparative Example 3

This comparative example differs from Example 3 only in that the quaternization reagent methyl trifluoroacetate was replaced with an equal amount of bromopropane. Other conditions and parameters were exactly the same as those in Example 1.

### Comparative Example 4

This comparative example differs from Example 4 only in that the quaternization reagent methyl trifluoroacetate was replaced with an equal amount of bromopropane. Other conditions and parameters were exactly the same as those in Example 1.

### Performance test

The anion-exchange polymers prepared in the Examples and Comparative Examples were separately dissolved in dimethyl sulfoxide to obtain homogeneous solutions. The homogeneous solutions were cast onto a flat-plate coater and dried at 60°C for 8 h to obtain anion-exchange membranes. The anion-exchange membranes were subjected to the following tests.

### 1. Mechanical performance test

Test method: refer to GB/T 1040.3 Plastics-Determination of tensile properties-Part 3: Test conditions for films and sheets (ISO 527-3:1995, IDT)

At a constant temperature of 23°C ± 2°C and a constant humidity of 50% ± 10%, the thickness and width of the sample were measured. The sample was placed in a fixture. Different tensile speeds may be used for measuring tensile strength and elongation at break, which were selected within the range of 50-200 mm/min. Separate sample was used for each speed. Load value was recorded when the sample broken.
a. Tensile strength: the ratio of the maximum load that a membrane prepared from the resin can bear when fracture occurs under pure tensile force to the width of the stretched membrane material, divided into transverse and machine direction tensile strengths, used to evaluate the mechanical strength of the membrane.
b. Elongation at break: the ratio of the distance between two points at break under the maximum load, which the resin membrane can bear before fracture, to the original length, indicating the maximum deformation that the alkaline membrane can withstand in stretch without fracture, used to evaluate the flexibility of the membrane.

### 2. Swelling performance test in pure water

Test method: the anion-exchange resin was prepared into a membrane; the membrane was cut into pieces of 1 cm × 4 cm in size, soaked in 1 M KOH solution, during which the alkali solution was refreshed three times, and then subjected to swelling performance test in deionized water at 80°C.

### 3. Water electrolysis application test

Membrane electrodes were prepared from the membrane, wherein an active area was 80 cm², a cathode Ni-Mo alloy loading was 1.0 mg/cm², and an anode nickel ferrite loading was 1.2 mg/cm², and then assembled as a single-cell electrolyzer. The polarization performance, area resistance, and decay rate over 1000 h of the membrane were tested at an operating temperature of 60°C (calculation of the decay rate: the difference of integral values obtained by operation at 0.5 A/cm² for 20 h before and after different stability test procedures was divided by the integral value of initial stability, to give the decay rate). The polarization performance refers to the cell voltage at 1.0 A/cm². The test results are shown in Table 1.

**Table 1**

| | Tensile strength (MPa) | Elongation at break (%) | Swelling ratio (%) | Polarization performance (V) | Area resistance (mΩ/cm²) | Decay rate over 1000 h (%) |
|---|---|---|---|---|---|---|
| Example 1 | 37 | 28 | 17.9 | 1.79 | 191 | 3.2 |
| Example 2 | 40 | 23 | 14.7 | 1.78 | 190 | 1.7 |
| Example 3 | 36 | 30 | 19.3 | 1.81 | 212 | 3.9 |
| Example 4 | 46 | 19 | 12.1 | 1.76 | 181 | 2.0 |
| Example 5 | 45 | 14 | 10.5 | 1.78 | 185 | 1.9 |
| Example 6 | 48 | 20 | 14.5 | 1.75 | 177 | 2.2 |
| Example 7 | 44 | 16 | 12.4 | 1.77 | 183 | 2.1 |
| Example 8 | 47 | 19 | 10.7 | 1.73 | 172 | 1.9 |
| Comparative Example 1 | 36 | 27 | 18.6 | 1.84 | 235 | 6.6 |
| Comparative Example 2 | 39 | 20 | 15.5 | 1.82 | 225 | 3.5 |
| Comparative Example 3 | 34 | 28 | 19.9 | 1.84 | 230 | 8.3 |
| Comparative Example 4 | 45 | 17 | 12.7 | 1.81 | 207 | 5.1 |

As can be seen from Table 1, according to Examples 1-4, the anion-exchange polymer in the present application exhibits a tensile strength of 36 MPa or more, an elongation at break of 34% or less, a swelling ratio of 19.9% or less, a cell voltage at 1.0 A/cm² of 1.81 V or less, an area resistance of 212 mΩ/cm² or less, and a decay rate over 1000 h of 3.9% or less. For different main chain structures, the electrochemical performance of the membrane materials quaternized with methyl trifluoroacetate is superior to the electrochemical performance of the membrane materials quaternized with iodomethane.

As can be seen from the comparison between Example 4 and Examples 5-6, the additive amount of the acid-binding agent for preparation affects the performance of the anion-exchange polymer in the present application. When the amount-of-substance ratio of the acid-binding agent to the polymer precursor is controlled within (1.1-1.3):1, the prepared anion-exchange polymer exhibits better performance. An overly high additive amount of the acid-binding agent results in excessively high swelling; the polarization performance is improved, but high swelling may result in reduced electrochemical stability. If the additive amount of the acid-binding agent is overly low, the swelling decreases, and the polarization performance, i.e., the electrochemical performance, will be reduced.

As can be seen from the comparison between Example 4 and Examples 7-8, the amount-of-substance proportions of the chain unit I and the chain unit II affect the performance of the anion-exchange polymer in the present application. When the amount-of-substance proportion of the chain unit I is controlled within 85-95% and the amount-of-substance proportion of the chain unit II is controlled within 5-15%, the prepared anion-exchange polymer exhibits better performance. If the amount-of-substance proportion of the chain unit I is overly high, there may be a solubility issue; however, if the prepared anion-exchange polymer remains soluble, advantages such as low swelling and high ionic conductivity can be observed. If the amount-of-substance proportion of the chain unit I is overly low, there is no significant improvement in dimensional stability and electrochemical performance.

As can be seen from the comparisons between Example 1 and Comparative Example 1, Example 2 and Comparative Example 2, Example 3 and Comparative Example 3, and Example 4 and Comparative Example 4, the use of ester-based quaternization reagents instead of conventional haloalkane quaternization reagent in the present application has no significant influence on the mechanical properties or dimensional stability of the final product, but in terms of the polarization performance and area resistance data, Examples show advantages over Comparative Examples, where the polarization performance is reduced by nearly 50 mV. This is resulted from the influences of anions after different quaternization on the catalytic aspect. The membrane materials of the examples exhibit relatively weak interaction between anions and metal active sites, have low catalyst poisoning, and therefore demonstrate more excellent electrochemical performance. Comparing the decay rate data over 1000 h of different samples, it is evident that the membrane materials of the examples exhibit superior application stability when the main chain structures are same, further indicating that the materials having ester-based quaternization possess significant advantages.

## Claims

1. An anion-exchange polymer, which comprises a chain unit I and/or a chain unit II, wherein a structural formula of the chain unit I is 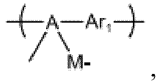 and a structural formula of the chain unit II is 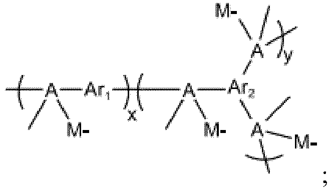 wherein A is nitrogen-containing heterocyclic ketone, Ar₁ is a first aryl structure, Ar₂ is a second aryl structure, M- is a trifluoroacetate ion and/or a p-toluenesulfonate ion, x is 0.5-0.9, and y equals 1-x.

2. The anion-exchange polymer according to claim 1, wherein based on a total amount of substance of chain units in the anion-exchange polymer being 100%, an amount-of-substance proportion of the chain unit I is 85-95%.

3. The anion-exchange polymer according to claim 1 or 2, wherein based on a total amount of substance of chain units in the anion-exchange polymer being 100%, an amount-of-substance proportion of the chain unit II is 5-15%.

4. The anion-exchange polymer according to any one of claims 1-3, wherein the nitrogen-containing heterocyclic ketone comprises piperidinone and/or quinuclidinone.

5. The anion-exchange polymer according to claim 4, wherein a structural formula of the piperidinone is 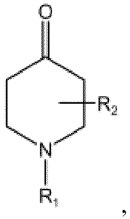 wherein R₁ and R₂ each independently comprises any one or a combination of at least two of methyl, ethyl, propyl, butyl, pentyl, cyclopropyl, cyclopropyl or halogen.

6. The anion-exchange polymer according to claim 4, wherein a structural formula of the quinuclidinone is 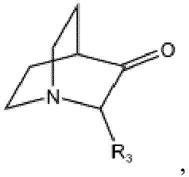 wherein R₃ comprises any one or a combination of at least two of hydrogen, alkyl, alkenyl, alkynyl, hydroxyl, alkoxy, or aryl; and R₃ contains 0-20 carbon atoms.

7. The anion-exchange polymer according to any one of claims 1-6, wherein the first aryl structure comprises any one or a combination of at least two of biphenyl, p-terphenyl, m-terphenyl, quaterphenyl, or 1,2-diphenylethane;
optionally, the second aryl structure comprises any one or a combination of at least two of 1,3,5-triphenylbenzene, triphenylmethane, 9,10-benzophenanthrene, tetraphenylmethane, triptycene, 9,9'-diphenylfluorene, 9,9'-spirobifluorene, 9,9'-bifluorene, 9,9'-bicarbazole, 4,4-di(9-carbazolyl)biphenyl, 2,2'-bi-9,9'-spirobi[9H-fluorene], or triphenylamine.

8. A preparation method for the anion-exchange polymer according to any one of claims 1-7, which comprises the following steps:
(1) mixing monomers of the chain unit I and/or monomers of the chain unit II, the nitrogen-containing heterocyclic ketone, and a first solvent to obtain a first mixed solution; adding superacid to the first mixed solution and performing a polymerization reaction to obtain a polymer precursor; and
(2) mixing the polymer precursor, a quaternization reagent, an acid-binding agent, and a second solvent to obtain a second mixed solution; subjecting the second mixed solution to a functionalization reaction to obtain the anion-exchange polymer.

9. The preparation method according to claim 8, wherein the first solvent in step (1) comprises any one or a combination of at least two of dichloromethane, trichloromethane, chloroform, or tetrahydrofuran.

10. The preparation method according to claim 8 or 9, wherein in step (1), an amount-of-substance ratio of a total amount of substance of the monomers of the chain unit I and the monomers of the chain unit II to the nitrogen-containing heterocyclic ketone is 1:(1-4).

11. The preparation method according to any one of claims 8-10, wherein the superacid in step (1) comprises any one or a combination of at least two of methanesulfonic acid, pentafluoropropionic acid, trifluoroacetic acid, trifluoromethanesulfonic acid, or heptafluorobutyric acid.

12. The preparation method according to any one of claims 8-11, wherein the addition of the superacid in step (1) is performed at an environmental temperature of -2°C to 2°C;
optionally, the polymerization reaction in step (1) comprises performing an oligomerization reaction first and then a high-degree polymerization reaction;
optionally, the oligomerization reaction is performed at a temperature of 4-6°C;
optionally, the oligomerization reaction is performed for a period of 1-5 h;
optionally, the high-degree polymerization reaction is performed at a temperature of 12-18°C;
optionally, the high-degree polymerization reaction is performed for a period of 1-5 h;
optionally, after the polymerization reaction in step (1), extrusion, water washing, and drying are performed.

13. The preparation method according to any one of claims 8-12, wherein the quaternization reagent in step (2) comprises methyl trifluoroacetate and/or methyl p-toluenesulfonate;
optionally, in step (2), an amount-of-substance ratio of the quaternization reagent to the polymer precursor is (1.2-1.8):1;
optionally, the acid-binding agent in step (2) comprises any one or a combination of at least two of potassium carbonate, sodium carbonate, triethylamine, diethanolamine, or ethylenediamine;
optionally, in step (2), an amount-of-substance ratio of the acid-binding agent to the polymer precursor is (1.1-1.3):1;
optionally, the second solvent in step (2) comprises any one or a combination of at least two of dimethyl sulfoxide, tetrahydrofuran, N-methyl-2-pyrrolidone, N,N-dimethylformamide, N,N-dimethylacetamide, or acetonitrile;
optionally, the functionalization reaction in step (2) is performed at a temperature of 30-100°C;
optionally, the functionalization reaction in step (2) is performed for a period of 10-20 h.

14. An anion-exchange membrane, which is prepared from the anion-exchange polymer according to any one of claims 1-7 by dissolving in a third solvent, and then coating and drying.

15. The anion-exchange membrane according to claim 14, wherein the third solvent comprises any one or a combination of at least two of ethanol, ethyl acetate, ethylene glycol, diethyl ether, tetrahydrofuran, acetone, or water;
optionally, the drying is performed at a temperature of 50-70°C;
optionally, the drying is performed for a period of 5-10 h.
